# EUROPEAN PATENT SPECIFICATION

(11) **EP 2 705 247 B1**
(45) Date of publication and mention of the grant of the patent: **29.06.2016**
(21) Application number: 12720269.5
(22) Date of filing: 04.05.2012
(51) Int. Cl.: F03B 3/04, F03B 13/10, F03B 13/26

(54) **UNDERWATER TURBINE ANCHORAGE**
UNTERWASSERTURBINENVERANKERUNG
ANCRAGE DE TURBINE SUBAQUATIQUE

(30) Priority: 06.05.2011 GB 201107560
(43) Date of publication of application: 12.03.2014
(73) Proprietor: Tidalstream Limited, Southam, Warwickshire CV47 0HF (GB)
(72) Inventor: TODMAN, Michael Torr, Southam Warwickshire CV47 2BT (GB); ARMSTRONG, John, Richard, Carew, London W4 2AF (GB)
(74) Representative: Gray, James
(86) International application number: PCT/GB2012/050970
(87) International publication number: WO 2012/153107

(56) References cited:
- WO-A1-2008/149132
- WO-A2-2010/078903
- GB-A- 2 200 880
- GB-A- 2 434 410
- GB-A- 2 450 624
- GB-A- 2 471 874

## Description

This invention relates to an underwater anchorage for a tethered floating device, in particular a tidal turbine generator.

It often happens that the underwater electrical connection of a rotating system needs to be made to a relatively fixed seabed anchorage. Examples are FPSO (Floating Platform Storage and Offloading) systems and, more recently, tidal stream turbines.

With an FPSO the production lines (risers) which can include oil, gas, water and hydraulic as well as electrical power lines, are connected to a major component of a floating vessel, called a turret, which allows the vessel to rotate in order to head into the wind and reduce environmental forces on the moorings. In relatively calm waters turrets can be located externally to the structure of the vessel, hanging off the bow of the FPSO. For harsher environments like the North Sea, the turret is generally located internally. The turrets and the mooring systems can be designed to be disconnectable or to remain permanently moored. In both cases the rotating interface is near the surface of the sea and is connected to the seabed by mooring lines.

For tidal turbines that are tethered through an underwater anchorage, rotation of the underwater unit about a vertical axis to follow the tide change is combined with a requirement for the electricity generated to be transmitted via the seabed anchorage to a shore-based substation or grid connection. Transmitting large amounts of power across such a rotating joint at the seabed, and access to those parts for maintenance or repair, present engineering challenges very different to existing FPSO systems.

A similar problem of rotation is encountered on a wind-turbine when the nacelle of the turbine is turned about a vertical axis to follow the prevailing wind direction. Here the resulting twist in the electrical power cables is managed by allowing these cables to hang down the tower to such a length as to be able to accommodate sufficient twist, within the permitted number of turns of rotation of the nacelle. These cables are in addition usually unarmoured, which allows them more flexibility in twisting than if armoured. Replacing these cables if damaged for any reason is a practical proposition because there is access to both ends of the cable, and lowering and lifting equipment can be arranged to allow cables to be handled and removed.

Underwater, where the seabed connection may be many tens or even hundreds of metres below the surface, replacement and even access is much more difficult. In typical strong tidal streams, crane barges or jack-ups are impractical and it may be too dangerous to send divers down.

What is required is a means of simply accessing for repair or replacement the rotating support and cable arrangement of an electrically connected subsea system that swings around, for instance to follow the tidal direction.

GB-A-2450624 discloses an anchorage for an underwater turbine from which can be derived the pre-characterizing portion of claim 1 appended hereto.

WO-A-2010/078903 discloses an underwater mounting for an underwater turbine, the mounting comprisng fixed and relatively rotatable elements.

According to the invention there is provided an underwater anchorage for tethering a buoyant device, and adapted to permit movement of said device in a stream flow, said anchorage comprising a foundation for fixed attachment to an underwater surface, and a hub rotatable about an upright axis of the foundation, said foundation and hub comprising a spigot engageable in a spigot recess on said axis, and having a disengageable latch to retain the spigot in the recess in use, characterized in that, said hub comprises a non-rotatable element for engagement with said foundation, and a relatively rotatable element for attachment to a tether of a buoyant device, said latch being provided on said non-rotatable element.

This arrangement allows the moving and stationary components of the hub to be withdrawn for repair or replacement. In the case of an underwater turbine, the power cable can be raised with the hub leaving the anchorage undisturbed.

Thus all elements of the rotating joint - that which is connected to the part that swings round; that which is connected to the seabed anchorage; and the bearing arrangement between them - is capable of installation and removal from the seabed anchorage by remote means for repair or replacement. The invention is applicable to a seabed joint which permits roll and pitch, but may be restricted in yaw, in the case for instance of a turbine support which is fixed in alignment with the prevailing current directions.

Further embodiment of the invention relate to the retention system that holds the combined elements in place within the foundation anchorage.

In the invention a power cable or other service connection is routed via a tether of the buoyant device to the hub, and thence to the foundation or to an adjacent location which is fixed relative to the foundation. In one embodiment the hub guides the power cable so that it may be raised with the hub for maintenance and repair. A releasable connector for the cable may be provided at the underwater surface at the shore side of the anchorage, or sufficient slack cable may be provided to permit raising of the hub to the surface without disconnection of the cable.

The cable or other service connection is in one embodiment allowed freedom to twist with rotation of the tether about the vertical axis of the foundation, and slip rings and the like are not required.

One or more latches, controlled from the surface by any suitable means latches a non-rotating member of the hub to the anchorage. In one embodiment the non-rotating member is a non-circular spigot engageable by movement on said axis into a suitably shaped receptacle of the foundation. In another embodiment the spigot is on the foundation and projects upwardly on the rotating axis, and the hub includes an aperture to receive the spigot.

The non-rotating hub member and the anchorage may include a key or spline or other non-circular shape to provide rotational alignment.

The hub may be drawn down to the foundation by a guide wire passing through the foundation and up to a vessel on the surface. The guide wire may also permit a controlled raising of the hub assembly for example by increasing the buoyancy thereof Latching and unlatching of the hub may be determined by movement of the guide wire, or by the angle of incidence thereof.

The invention also provides a method of tethering a buoyant underwater turbine, and comprising providing a fixed foundation on the underwater surface, providing a turbine having one end of a tether connected thereto, attaching the other end of the tether to a hub, disengageably attaching a stationary element of said hub to said foundation, said hub having a relatively rotatable element for said tether, and supporting an electrical cable from said turbine to an underwater inter-connector.

These and other features of the invention will be illustrated from the example of a free-swinging tethered tidal stream turbine of the type described by Armstrong in UK Patent GB2348249B. In the following description a preferred embodiment is illustrated, by way of example only, in the accompanying drawings in which:
Figure 1a and 1b illustrates a typical semi-submersible tidal turbine.
Figure 2a and 2b illustrate alternative arrangements for a system handling rotation of the power cable.
Figure 3a, b, & c illustrate an arrangement for installing and releasing the joint and cable rotation system.
Figure 4a & 4b illustrate an alternative locking a releasing method.
Figure 5a & 5b illustrates a cable routing method.
Figure 6 illustrates a cable release method.
Figure 7 illustrates a cable pull-down system with winch mounted on the rotating joint.
Figures 8a-8c illustrates the alternative arrangement of having a simple peg on the foundation.

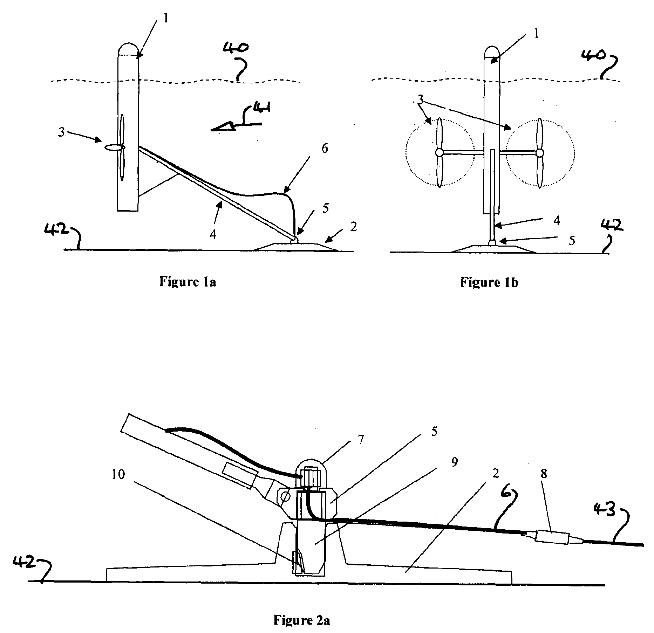

Figure 1a illustrates a typical twin-rotor semi-submersible tidal turbine. A main buoyancy chamber protrudes above the water surface 40. Turbines 3 are aligned to the oncoming water current 41. A rigid tether arm 4 joins chamber 1 to a mount 2 on the underwater surface 42 by means of a three-axis articulated joint assembly 5. An electrical cable 6 emerges from the seabed mount and is connected to the tidal turbines 3. More or less turbines may be provided on a frame of any suitable form. The buoyancy chamber 1 typically has variable buoyancy to permit transition from a semi-submerged condition to a surface condition.

Figure 1b shows a view on to the turbines along the direction of water current flow. The tethered assembly is free about the joint assembly 5 to swing around an upright axis to follow the tidal direction; to heave up and down in response to wave action; and to roll about the long axis of the tether arm 4 under the influence of buoyancy change so that the turbines can be moved to the surface 40 where they can be accessed for maintenance.

Figure 2a shows details of the electricity power connection being made through a slip ring unit 7. A relatively fixed part of the cable 6 emerges from below a rotating joint 5 and into a connector 8, connecting to the delivery cable 43 or inter-connector from the shore. A slip ring allows for the tether arm to make rotations about the vertical axis of the foundation as the turbines respond to changes in tidal direction, whilst maintaining the electrical connection to the turbines.

The joints, slip ring unit 7 and cable connections are fixed to the seabed mount 2 by means of a spigot 9 held in a mating recess in the seabed foundation and retained in it. A spline or keyway 10 may be used to rotationally orientate the spigot 9 as it is drawn into the mount 2.

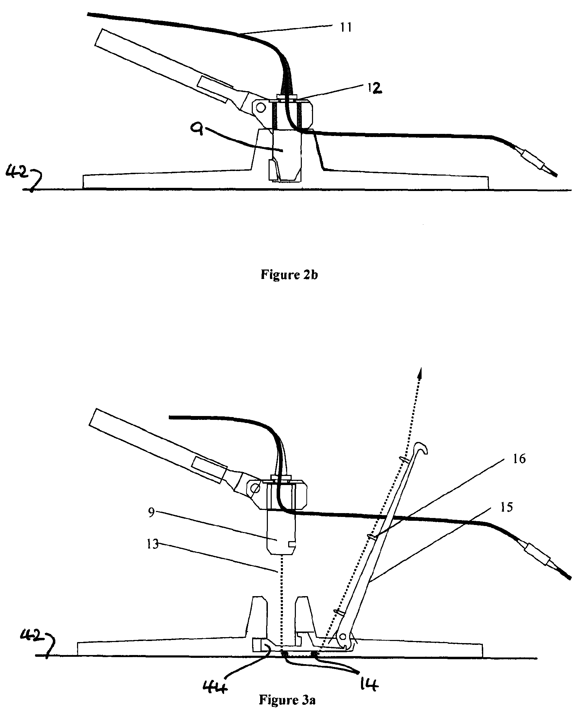

Figure 2b shows an alternative arrangement in which a slip ring unit is replaced by a length of flexible cable 11. This cable 11 may be held steady and upright in the current by a shaped flexible gaiter 12 attached to the fixed upper end of spigot 9. As the tether arm rotates in response to tidal direction changes, cable 11 will flex to follow the tether arm, but will also twist up relative to it. This twisting may be maximised by attaching the cable 11 only loosely to the tether arm - eg by the use of retaining hoops - and by attaching floats so that the cable is neutrally buoyant and therefore able to twist all the way to the top of the tether arm, and even beyond to the top of the spar buoy where it is electrically connected. In this way, several rotations of the tether arm, and twists of the cable, may be accommodated before the system is unwound, such as by an appropriate control system.

The method of installation of the rotating joint and cable assembly is illustrated in Figure 3a with reference - for the purpose of example - to the through-cable connection described in Figure 2b. To the spigot 9 is attached a haul-down wire 13, running under one or more pulleys 14 mounted to the fixed foundation, which has been pre-installed - and then upwards to a surface support vessel (not shown).

The wire 13 also runs close to an arm 15, hinged at its lower end to the foundation 2, and is held loosely to the arm by hoops 16.

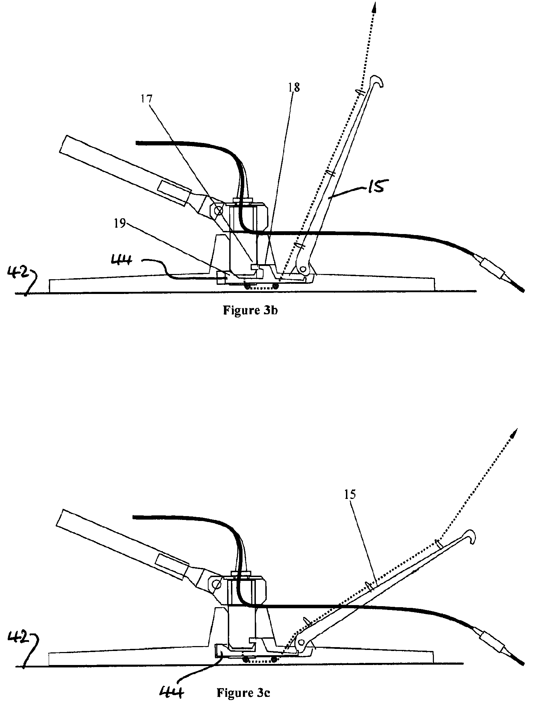

In Figure 3b, the spigot 9 has been pulled completely down into the foundation recess and is ready to be locked into position. At this point, a groove 17 in the spigot 9 is situated opposite a peg 18 mounted on a sliding member 44 engaged at one end by a lever at the lower end of arm 15.

In Figure 3c, the support vessel attached to the wire 13 has been moved so that the direction of pull has been made more shallow (i.e. less vertical). As this happens, the arm 15 is lowered, and the sliding member to which it is attached is moved in so that peg 18 engages groove 17. This serves to lock spigot 9 into the foundation, so the turbines are tethered, and power generation can commence.

The downhaul wire 13 may now be released completely, allowing arm 15 to rest for instance on the foundation. An acoustically releasable buoy may for example be fitted to the end of the wire for subsequent recovery, and the wire and buoy dropped to the seabed.

Recovery of the rotating joint and cable system is made by reversing the above described process. The acoustic buoy is triggered, so that the free end of wire 13 may be recovered, and the arm 15 raised. By combining tension on wire 13 with the angle of wire 13 and therefore of arm 15, spigot 9 may be released from the foundation, and allow the rotating joint, cable and tether arm end to be brought to the surface. To ensure that spigot 9 does not become stuck in the foundation recess, the sliding member 44 has a cam 19 on one end, to engage with the chamfered bottom face of spigot 9, breaking any binding and forcing it upwards, as illustrated.

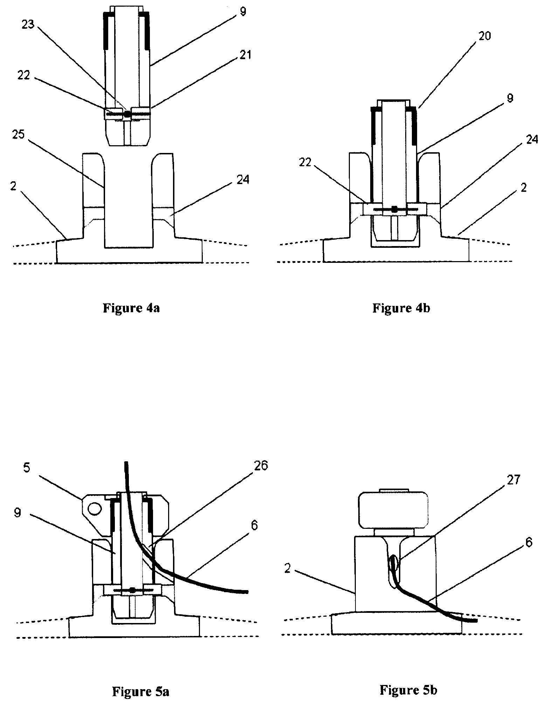

Figure 4a shows a spigot 9 that contains an engagement and locking mechanism that is fully contained internally. It comprises retractable latches 21 which are housed in spigot 9 and can be moved in or out by mechanism 23, which can be actuated by such as an electric ball drive, hydraulic system or other mechanical means. Part of the seabed anchorage 2 is shown with a socket feature 25 shaped to receive spigot 9. This may also include a spline feature such as shown in figure 2a to help rotational alignment of the spigot 9 within 25. Latch receiving apertures 24 are located in anchorage 2 and may have a widened mouth at the outside to assist ejection of any sea-borne debris as the latches 21 are engaged upon outward movement thereof.

Figure 4b shows the spigot 9 engaged within the anchorage 2 where latches 22 are activated to engage within apertures 24 in anchorage 2 firmly retaining the two components together. The upper section of spigot 9 contains rotational bearing items 20 that enable a tether, connecting arm or device (not shown) to rotate freely around the spigot.

A method of electrical cable handling is shown in Figure 5a where it can be seen that the power cable 6 which would be pre-connected to the tidal turbine by means such as described in figures 2a or 2b can be routed out through an aperture 26 in the side of spigot 9 prior to engagement of the spigot and any attached turbine connecting component. Figure 5b shows an external side view of the anchorage 2 with the spigot 9 engaged and the cable 9 emerging via slot 27.

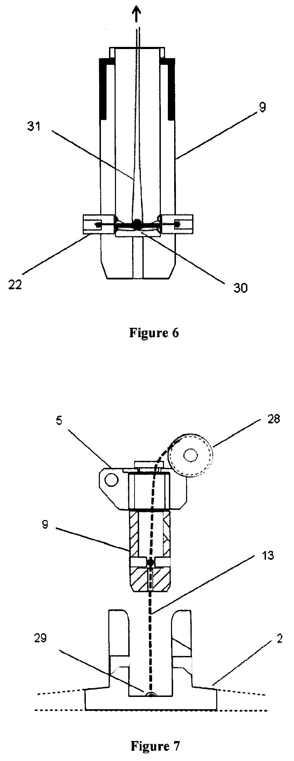

To separate the main components and retrieve the spigot, bearings, cable and any connected equipment, actuation of the latches will release the spigot and enable it to be lifted free. However, it is possible that the mechanism may have become damaged or otherwise affected preventing normal retraction and release. To this end Figure 6 illustrates a secondary method of removal that could be employed. Latches 22 have attachment points 30 to which cables 31 are connected. These are passed around a pulley system 30 and routed internally up through spigot 9 where they can be acted on remotely. By pulling on the cables 31 the normal actuation system may be over-ridden and the latches withdrawn thus disengaging them from the housing.

The locking system described in Figures 4 and 5 may accompany a pull-down system effected by a cable loop from the sea surface, as indicated in Figure 3a. Alternatively, as shown in Figure 7, a winch 28 can be mounted on the rotating element of the spigot attachment 5 and connected to the anchorage at a point 29. By activating the winch which may be electrical or hydraulic the spigot and attached components are drawn down into the anchorage where the locking system can then be engaged. Removal is the reverse process with the winch letting out cable 13 until the spigot and attached components can be accessed from the surface. This ensures that all components are retrievable for maintenance, repair or removal without any other sub-sea intervention.

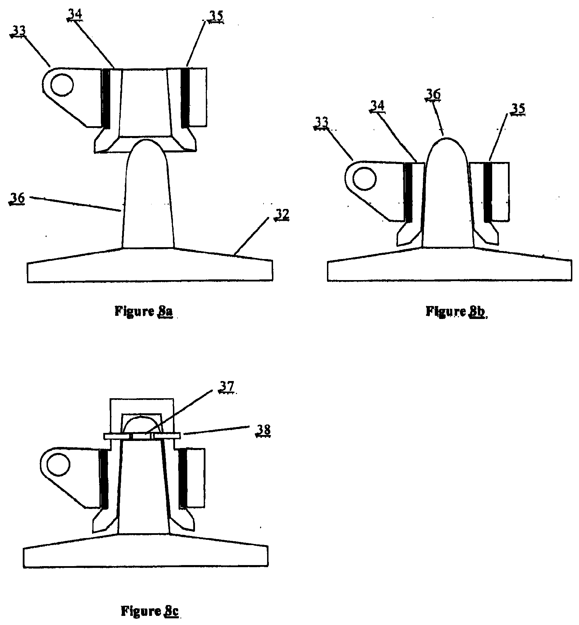

Figure 8a shows an alternative arrangement with components reversed - the base 32 has the spigot 36 mounted to it. The joint 33 which is attached to the tether arm contains a bearing system 35 which rotates around a collar 34. This collar 34 is part of the assembly which is lowered down to the seabed and on to the spigot 36. Figure 8b shows the joint assembly in position on the spigot. The spigot may be constructed of a shape which prevents rotation between the collar 34 and the spigot 36, and which helps guide the two elements together.

Figure 8c shows a typical latching arrangement 38 which shows elements 38 engaged in slots 37 which can be employed to prevent the collar and spigot parting under any vertical loads. The method for engaging and disengaging the latching arrangement may be similar to those disclosed above. The slip ring system and pull down winch arrangement described above are also applicable to this arrangement.

## Claims

1. An underwater anchorage (2) for tethering a buoyant device, and adapted to permit movement of said device in a stream flow, said anchorage comprising a foundation for fixed attachment to an underwater surface (42), and a hub rotatable about an upright axis of the foundation, said foundation and hub comprising a spigot engageable in a spigot recess on said axis, and having a disengageable latch (21) to retain the spigot in the recess in use, **characterized in that**, said hub comprises a non-rotatable element (9, 34) for engagement with said foundation, and a relatively rotatable element (5, 33) for attachment to a tether of a buoyant device, said latch being provided on said non-rotatable element.

2. An anchorage according to claim 1, wherein the spigot (9) is on said hub and comprises said non-rotatable element.

3. An anchorage according to claim 1, wherein the spigot (36) is on said foundation, and said hub comprises said recess, a rotatable element (33) being provided on the hub for attachment to the tether of a buoyant device.

4. An anchorage according to any preceding claim, wherein said latch (21) is displaceable orthogonally of said axis.

5. An anchorage according to claim 4, wherein said latch comprises opposing latch elements (22).

6. An anchorage according to any preceding claim, wherein said spigot and spigot recess include radially extending means (10) to prevent relative rotation thereof.

7. An anchorage according to claim 6, wherein said radially extending means (7) comprise one of a key, a spline and a non-circular cross-section of the spigot.

8. An anchorage according to any preceding claim, wherein said hub further includes a pathway for an electrical cable (11) of an underwater turbine.

9. An anchorage according to claim 8, wherein said pathway is defined in rotatable and non-rotatable elements of the hub.

10. An anchorage according to claim 8 or claim 9, and further including a tether (4) for connection to an underwater turbine, and an electrical cable (11) from said tether for connection to an underwater inter-connector.

11. A method of tethering a buoyant underwater turbine, and comprising:
providing an underwater anchorage (2) according to one of claims 1-10 on the underwater surface,
providing a turbine having one end of a tether (4) connected thereto,
attaching the other end of the tether to a hub (5),
disengageably attaching a stationary element of said hub to said foundation, said hub having a relatively rotatable element for said tether, and supporting an electrical cable (11) from said turbine to an underwater inter-connector.

12. A method according to claim 11, and further including the step of latching said hub (5) and said underwater anchorage (2) from the water surface.

13. A method according to claim 11 or claim 12, and including the step of providing a guide wire from said underwater anchorage to draw said hub thereto.

## Patentansprüche

1. Unterwasserverankerung (2) zum Halten einer schwimmenden Vorrichtung und geeignet, die Bewegung der Vorrichtung in einer Strömung zu ermöglichen, wobei die Verankerung ein Fundament zur festen Anbringung an einer Unterwasserfläche (42) und eine Nabe aufweist, die um eine aufragende Achse des Fundaments drehbar ist, wobei das Fundament und die Nabe einen Zapfen, der in eine Zapfenausnehmung in der Achse einsetzbar ist, und eine lösbare Verriegelung (21) aufweisen, um den Zapfen im Gebrauch in der Ausnehmung zu halten, **dadurch gekennzeichnet, dass** die Nabe ein nicht drehbares Element (9, 34) zum Zusammengreifen mit dem Fundament und ein relativ bewegbares Element (5, 33) zur Befestigung an einer Halteeinrichtung einer schwimmenden Vorrichtung aufweist, wobei die Verriegelung an dem nicht drehbaren Element vorgesehen ist.

2. Verankerung nach Anspruch 1, bei welcher der Zapfen (9) sich an der Nabe befindet und das nicht drehbare Element aufweist.

3. Verankerung nach Anspruch 1, bei welcher der Zapfen (36) sich an dem Fundament befindet und die Nabe die Ausnehmung aufweist, wobei an der Nabe ein drehbares Element (33) zur Anbringung an der Halteeinrichtung einer schwimmenden Vorrichtung vorgesehen ist.

4. Verankerung nach einem der vorhergehenden Ansprüche, bei welcher die Verriegelung (21) orthogonal zu der Achse verschiebbar ist.

5. Verankerung nach Anspruch 4, bei welcher die Klinke entgegengesetzte Verriegelungselemente (22) aufweist.

6. Verankerung nach einem der vorhergehenden Ansprüche, bei welcher der Zapfen und die Zapfenausnehmung sich radial erstreckende Einrichtungen (10) aufweisen, um ein relatives Drehen derselben zu verhindern.

7. Verankerung nach Anspruch 6, bei welcher die sich radial erstreckenden Einrichtungen (7) eine Passfeder, einen Keil oder einen nicht kreisförmigen Querschnitt des Zapfens aufweisen.

8. Verankerung nach einem der vorhergehenden Ansprüche, bei welcher die Nabe ferner einen Durchlass für ein Elektrokabel (11) einer Unterwasserturbine aufweist.

9. Verankerung nach Anspruch 8, bei welcher der Durchlass in drehbaren und nicht drehbaren Elementen der Nabe ausgebildet ist.

10. Verankerung nach Anspruch 8 oder Anspruch 9, und ferner mit einer Halteeinrichtung (4) zur Verbindung mit einer Unterwasserturbine, und mit einem von der Halteeinrichtung ausgehenden Elektrokabel (11) zur Verbindung mit einem Unterwasser-Verbinder.

11. Verfahren zum Halten einer schwimmenden Unterwasserturbine und mit den folgenden Schritten:
Bereitstellen einer Unterwasserverankerung (2) nach einem der Ansprüche 1-10 auf der Unterwasserfläche,
Bereitstellen einer Turbine, die mit einem Ende einer Halteeinrichtung (4) verbunden ist,
Befestigen des anderen Endes der Halteeinrichtung an einer Nabe (5),
lösbares Befestigen eines stationären Elements der Nabe an dem Fundament, wobei die Nabe ein relativ drehbares Element für die Halteeinrichtung aufweist, und ein von der Turbine zu einem Unterwasser-Verbinder verlaufendes Stromkabel (11) stützt.

12. Verfahren nach Anspruch 11 und ferner mit dem Schritt des Verriegelns der Nabe (5) und der Unterwasserverankerung (5) von der Wasseroberfläche aus.

13. Verfahren nach Anspruch 11 oder Anspruch 12 und mit dem Schritt des Bereitstellens eines Führungsdrahts von der Unterwasserverankerung, um die Nabe zu dieser zu ziehen.

## Revendications

1. Ancrage subaquatique (2) pour attacher un dispositif flottant, et adapté pour permettre le mouvement dudit dispositif dans un écoulement, ledit ancrage comprenant une fondation pour le raccordement fixe à une surface subaquatique (42), et un moyeu rotatif autour d'un axe vertical de la fondation, ladite fondation et ledit moyeu comprenant un ergot pouvant s'engager dans un évidement à ergot sur ledit axe, et comportant un verrouillage séparable (21) pour retenir l'ergot dans l'évidement durant l'utilisation, **caractérisé en ce que** ledit moyeu comprend un élément non rotatif (9, 34) pour l'entrée en prise avec ladite fondation, et un élément relativement rotatif (5, 33) pour le raccordement à une attache d'un dispositif flottant, ledit verrouillage étant prévu sur ledit élément non rotatif.

2. Ancrage selon la revendication 1, dans lequel l'ergot (9) est sur ledit moyeu et comprend ledit élément non rotatif.

3. Ancrage selon la revendication 1, dans lequel l'ergot (36) est sur ladite fondation, et ledit moyeu comprend ledit évidement, un élément rotatif (33) étant prévu sur le moyeu pour le raccordement à l'attache d'un dispositif flottant.

4. Ancrage selon l'une quelconque revendication précédente, dans lequel ledit verrouillage (21) est déplaçable orthogonalement par rapport audit axe.

5. Ancrage selon la revendication 4, dans lequel ledit verrouillage comprend des éléments de verrouillage opposés (22).

6. Ancrage selon l'une quelconque revendication précédente, dans lequel ledit ergot et ledit évidement à ergot incluent des moyens s'étendant radialement (10) pour empêcher leur rotation relative.

7. Ancrage selon la revendication 6, dans lequel lesdits moyens s'étendant radialement (7) comprennent une parmi une clavette, une cannelure et une section transversale non circulaire de l'ergot.

8. Ancrage selon l'une quelconque revendication précédente, dans lequel ledit moyeu inclut en outre une voie de passage pour un câble électrique (11) d'une turbine subaquatique.

9. Ancrage selon la revendication 8, dans lequel ladite voie de passage est définie dans des éléments rotatif et non rotatif du moyeu.

10. Ancrage selon la revendication 8 ou la revendication 9, incluant en outre une attache (4) pour la liaison à une turbine subaquatique, et un câble électrique (11) à partir de ladite attache pour la connexion à un dispositif d'interconnexion subaquatique.

11. Procédé d'attache d'une turbine subaquatique flottante, comprenant :
la fourniture d'un ancrage subaquatique (2) selon l'une des revendications 1 à 10 sur la surface subaquatique,
la fourniture d'une turbine comportant une extrémité d'une attache (4) liée à celle-ci,
le raccordement de l'autre extrémité de l'attache à un moyeu (5),
le raccordement séparable d'un élément stationnaire dudit moyeu à ladite fondation, ledit moyeu comportant un élément relativement rotatif pour ladite attache, et supportant un câble électrique (11) de ladite turbine à un dispositif d'interconnexion subaquatique.

12. Procédé selon la revendication 11, incluant en outre l'étape de verrouillage dudit moyeu (5) et dudit ancrage subaquatique (2) à partir de la surface de l'eau.

13. Procédé selon la revendication 11 ou la revendication 12, incluant l'étape de la fourniture d'un fil de guidage à partir dudit ancrage subaquatique, pour tirer ledit moyeu vers celui-ci.
